Europäisches Patentamt

European Patent Office

Office européen des brevets

(11) Veröffentlichungsnummer: **0 460 517 A2**

# (12) EUROPÄISCHE PATENTANMELDUNG

(21) Anmeldenummer: 91108758.3

(22) Anmeldetag: 29.05.91

(51) Int. Cl.⁵: **B23G 9/00**

(30) Priorität: 02.06.90 DE 4017854

(43) Veröffentlichungstag der Anmeldung:
11.12.91 Patentblatt 91/50

(84) Benannte Vertragsstaaten:
AT BE CH DE DK ES FR GB GR IT LI LU NL SE

(71) Anmelder: Adolf Würth GmbH & Co. KG
Postfach 1261
W-7118 Künzelsau(DE)

(72) Erfinder: Schopf, Thomas
Margaretenstrasse 6
W-7148 Remseck 2(DE)

(74) Vertreter: Patentanwälte RUFF, BEIER und
SCHÖNDORF
Neckarstrasse 50
W-7000 Stuttgart 1(DE)

(54) Verfahren zum Erneuern eines Gewindes.

(57) Bei der Erneuerung von in einen Hohlraum führenden Gewinden schlägt die Erfindung vor, während des Schneidens eines vergrößerten Gewindes
in den Hohlraum Druckluft einzuleiten, die durch die
Öffnung, in der das Gewinde geschnitten wird, abgelassen wird. Die beim Schneiden des Gewindes entstehenden Späne werden durch Spanabführnuten
des Werkzeugs nach außen geführt. Es wird auf
diese Weise dafür gesorgt, daß der Hohlraum frei
von Gewindespänen bleibt. Das Verfahren eignet
sich insbesondere bei der Erneuerung von Zündkerzengewinden.

FIG. 1

Die Erfindung betrifft ein Verfahren zum Erneuern eines Gewindes in einer durchgehenden Bohrung.

Beispielsweise bei Motorblöcken ist es erforderlich, wenn ein Gewinde zerstört wurde, dieses zu erneuern oder zu reparieren. Es ist zu diesem Zweck bekannt, in die vorhandene Gewindebohrung ein Gewinde mit vergrößertem Durchmesser einzuschneiden und in das so gebildete Gewinde eine mit einem Innen- und Außengewinde versehene Buchse einzupressen, deren Innengewinde dem ursprünglich vorhanden gewesenen Gewinde entspricht. Das Aufbohren des Gewindes geschieht mit einem stufenförmigen Gewindeschneider, dessen vorderer Abschnitt ein dem bisherigen Gewinde entsprechender Gewindeschneider ist. Dieser schneidet sich in das ggf. verformte bisherige Gewinde ein. Bei weiterem Eindrehen wird mit einem zweiten im Durchmesser vergrößerten Abschnitt das neue Gewinde geschnitten. Der vordere Abschnitt des Werkzeugs dient also zur Ausrichtung und Führung des Werkzeugs, so daß das zweite Gewinde mit gleicher Achse geschnitten wird. Wenn dieses neue Gewinde geschnitten ist, bleibt das Werkzeug in der Bohrung, und auf seinen glatten Schaft wird ein zweites Werkzeug aufgesetzt, das eine Vertiefung für einen Bund der einzusetzenden Gewindebuchse fräst. Während des Gewindeschneidens und des Fräsens entstehen natürlich Gewindespäne, die entfernt werden müssen. Beim anschließenden Einpressen der Gewindebuchse entstehen keine weiteren Späne.

Wenn mit diesem bekannten Verfahren beispielsweise ein Zündkerzen-Gewinde erneuert werden soll, so muß wegen der Späne der Zylinderkopf vom Motorblock entfernt werden. Zu diesem Zweck müssen sämtliche Schraubverbindungen gelöst und der Zylinderblock abgenommen werden. Nach Fertigstellung der neuen Gewinde können die Späne mechanisch entfernt werden und der Zylinderkopf wieder auf dem Motorblock festgeschraubt werden. Dieses Verfahren bedeutet einen großen Aufwand an Zeit und daher auch an Kosten. Zusätzlich treten die bei der Montage und Demontage eines relativ komplizierten Teils auftretenden Probleme auf.

Der Erfindung liegt die Aufgabe zugrunde, ein Verfahren zum Erneuern eines Gewindes zu schaffen, das sich mit geringerem zeitlichen und daher Kostenaufwand durchführen läßt und bei dem die Gefahr, daß Schneidspäne stören, dennoch vermieden wird.

Zur Lösung dieser Aufgabe schlägt die Erfindung ein Verfahren nach dem Anspruch 1 vor. Weiterbildungen der Erfindung sind Gegenstand der Unteransprüche.

Die Erfindung geht also von dem Gedanken aus, die beim Schneiden des Gewindes oder beim Fräsen einer Vertiefung entstehenden Späne im Augenblick ihres Entstehens sofort durch eine Gasströmung wegzuführen. Die Gasströmung wird in einer Richtung erzeugt, die von der Stelle wegführt, an der die Späne stören.

Damit die Gasströmung diese Aufgabe besonders gut erfüllen kann, kann erfindungsgemäß vorgesehen sein, daß ein Gewindeschneidwerkzeug mit Spanabführnuten verwendet wird, die sich vorzugsweise bis in den gewindefreien Abschnitt des Werkzeugschafts erstrecken. Die Spanabführnuten, die bei bekannten Gewindeschneidern bereits vorhanden sind, können im Hinblick auf ihre Aufgabe angepaßt werden, nämlich nicht nur Späne abführen zu können, sondern insbesondere auch dafür zu sorgen, daß die Späne relativ leicht abbrechen.

In Weiterbildung der Erfindung kann vorgesehen sein, daß nach dem Gewindeschneiden eine ringförmige Vertiefung für den Bund einer Gewindebuchse mit einem Werkzeug gefräst wird, das ebenfalls erfindungsgemäß mindestens eine Spanabführnut aufweist, wobei während dieses Vorgangs die Gasströmung aufrecht erhalten wird. Die Gasströmung kann auch diese Frässpäne entfernen, da das noch in der Bohrung sitzende Gewindeschneidwerkzeug ebenfalls Spanabführnuten aufweist, die bis in den Schaft hineinreichen.

In Weiterbildung der Erfindung kann vorgesehen sein, daß auch während des Herausdrehens des Gewindeschneidwerkzeugs die Gasströmung aufrecht erhalten bleibt. Beim Herausdrehen des Gewindeschneidwerkzeugs können noch vorhandene Späne gelöst werden, die dann ebenfalls noch wegtransportiert werden.

Beim anschließenden Einschrauben und Einpressen der Gewindebuchse entsteht kein Span mehr. Außerdem ist zu diesem Zeitpunkt die Bohrung vollständig ausgefüllt, da die Gewindebuchsen gasdicht in das Gewinde eingepreßt werden. Daher schlägt die Erfindung vor, vor dem Einpressen der Gewindebuchse die Gasströmung zu beseitigen.

Wenn die Bohrung mit dem zu erneuernden Gewinde in einen Hohlraum führt, so schlägt die Erfindung vor, den Gasstrom dadurch zu erzeugen, daß in den Hohlraum Druckluft eingebracht wird und durch die Bohrung ausströmt. Selbst wenn die zu bearbeitende Bohrung nicht die einzig freie Öffnung ist, ist diese Möglichkeit sehr günstig, da andere Bohrungen abgedichtet werden können oder mit einem gewissen Überschuß an Druckluft gearbeitet werden kann.

Insbesondere eignet sich das Verfahren nach der Erfindung für das Erneuern eines Zündkerzengewindes. Hier macht es die Erfindung möglich, den Zylinderkopf auf dem Motorblock zu lassen, d.h. nicht zu demontieren. Der Gasstrom wird dadurch erzeugt, daß Druckluft in den Brennraum des Motors eingeleitet wird. Dies kann beispielsweise über die Ansaugleitung des Motors geschehen, ggf. aber auch über die Auspuffleitung.

Es hat sich als besonders günstig herausgestellt, wenn der Auströmdruck am Kerzenloch mindestens etwa ein Bar beträgt. Dies läßt sich unter Berücksichtigung des durch Undichtigkeiten auftretenden Druckabfalls bei dem üblichen in Werkstätten vorhanden Druck von 3 - 5 Bar ohne weiteres erreichen.

Erfindungsgemäß kann vorgesehen sein, daß die Drosselklappe während der Durchführung des Verfahrens geöffnet gehalten wird. Die Druckluftzufuhr kann beispielsweise über einen einfachen Adapter vor dem Vergaser oder anders ausgedrückt an einer Stelle unmittelbar hinter dem Luftfilter erfolgen. Es braucht also nur das Luftfilter entfernt zu werden. Die Erfindung schlägt vor, mit Bohrungen versehene Lochplatten zu verwenden, die sich an die Vergasereingangsöffnung anschrauben lassen und mit einem Stutzen für einen Druckluftschlauch versehen sind. Diese Anschlußplatten könnten mit einer Vielzahl von Öffnungen versehen sein, die den vorhanden Schraubenlöchern bei einer Reihe von Kraftfahrzeugmodellen entsprechen.

Die Erfindung schlägt vor, daß bei einem Mehrzylindermotor während der Erneuerung des Zündkerzengewindes eines Zylinders die Zündkerzen der anderen Zylinder eingeschraubt bleiben oder wieder eingeschraubt werden. Das Austreten der Druckluft wird also auf die gerade bearbeitete Bohrung beschränkt.

Während des Einblasens der Druckluft in den jeweilen Brennraum kann durch Verdrehen der Kurbelwelle dafür gesorgt werden, daß jeweils gerade nur das Einlaßventil oder das Auslaßventil geöffnet ist, je nachdem von welcher Seite her die Druckluft eingebracht wird. Es ist natürlich auch denkbar, beide Ventile geöffnet zu halten und das Ausströmen der Druckluft durch das jeweils nicht benötigte Ventil durch andere Einrichtungen zu verhindern, beispielsweise durch ein Zustopfen des Auspuffs.

Die Erfindung schlägt vor, daß die Kurbelwelle so weit gedreht werden kann, daß für den betreffenden Zylinder der Kolben sich im Bereich des Gaswechsel- OT befindet. In diesem oberen Totpunkt nimmt das Volumen des Brennraums seinen kleinsten Wert ein, so daß die Vermeidung von Turbulenzen und damit ein zu starker Druckabfall vermieden wird, so daß eine kräftige gezielte Strömung durch das Zündkerzenloch erfolgt.

Die Erfindung eignet sich auch für das Erneuern des Gewindes einer Ölablaßschraube. Zu diesem Zweck wird ebenfalls Luftdruck in das Innere der Ölwanne eingebracht, beispielsweise durch die Öffnung für den Ölmeßstab.

Weiter Merkmale, Einzelheiten und Vorzüge der Erfindung ergeben sich aus den Ansprüchen, der folgenden Beschreibung einer bevorzugten Ausführungsform sowie anhand der Zeichnung. Hiebei zeigen:

Fig. 1     starkt vereinfacht einen Schnitt durch den oberen Bereich eines Motorblocks mit Zylinderkopf bei geöffnetem Einlaßventil;

Fig. 2     die Seitenansicht eines zur Durchführung des erfindungsgemäßen Verfahrens geeigneten Werkzeugs;

Fig. 3     ein auf das Werkzeug der Figur 2 aufzusetzendes mit Spanabführnuten versehenes Fräswerkzeug;

Fig. 4     eine Aufsicht auf das Werkzeug der Figur 3 von oben.

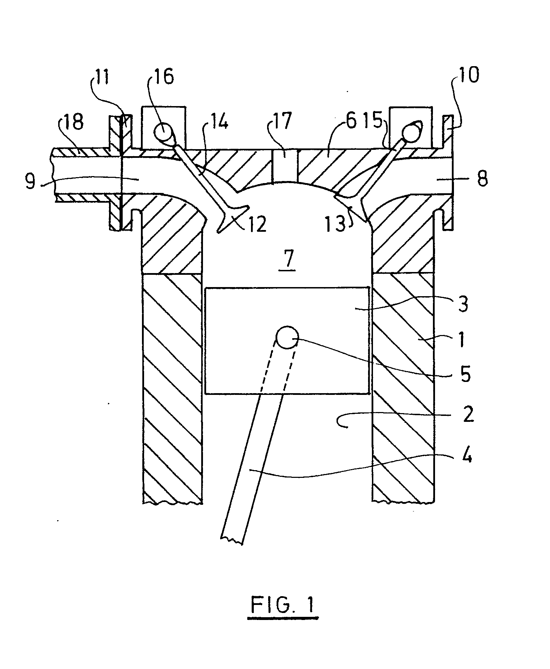

Figur 1 zeigt stark schematisch vereinfacht einen Schnitt durch den oberen Bereich eines Kolbenmotors. In einem Motorblock 1 ist eine Zylinderbohrung 2 gebildet, in der ein Kolben 3 verschiebbar gelagert ist. Der Kolben 3 ist über ein Pleuelstange 4, die im Pleuelauge 5 gelenkig mit dem Kolben 3 verbunden ist, mit einer nicht dargestellten Kurbellwelle verbunden. In Figur 1 ist der Kolben 3 kurz von oberen Totpunkt dargestellt.

Auf den Motorblock ist unter Zwischenlage einer nicht dargestellten Dichtung der Zylinderkopf 6 aufgesetzt und festgeschraubt. Der Zylinderkopf 6 enthält in seinem Innern einen zum Motorblock hin offenen Brennraum 7. In den Brennraum 7 führen zwei Kanäle 8, 9, die jeweils an der Außenseite des Zylinderkopfs 6 mit einem Flansch 10, 11 versehen sind. Jeder Kanal 8, 9 ist durch ein Ventil 12, 13 gegenüber dem Brennraum 13 verschließbar. Die Ventile sind in Längsrichtung ihres Schaftes 13, 14 verschiebbar gehaltert und werden durch Nockenwellen 16 betätigt.

In dem Brennraum 7 mündet ebenfalls eine Bohrung 17, die mit einem Innengewinde versehen ist. In diese Bohrung 17 wird eine nicht dargestellte Zündkerze eingeschraubt, die zum Zünden des Gemischs aus Luft und Brennstoff in der Brennkammer dient.

Beispielsweise soll der Kanal 9 der Einlaßkanal sein, durch den über eine Leitung 18 ein Gemisch aus Luft und Benzin eingeführt wird.

Wenn nun das Gewinde in der Bohrung 17 erneuert werden soll, so schlägt die Erfindung vor, während des Schneidens des Gewindes in den Brennraum 7 Druckluft einblasen, so daß im Brennraum 7 ein Oberdruck entsteht. Dieser Oberdruck entweicht durch die Zündkerzenbohrung 17. Eingebracht wird die Druckluft in den Brennraum 7 beispielsweise durch die Einlaßleitung 18 bei geöffnetem Einlaßventil 12 und geschlossenem Auslaßventil 13. Es ist selbstverständlich auch möglich, das Auslaßventil 13 zu Öffnen und Einlaßventil 12 zu schließen und die Druckluft durch die Auspuffleitung über den Kanal 8 einzubringen.

Die Kurbellwelle des Motors wird so gedreht, daß der Kolben 3 etwa im Bereich seines oberen Totpunkts ist, damit der Brennraum 7 möglichst klein wird und sich möglichst wenig Wirbel bilden können.

Der Druck der Druckluftquelle wird so eingestellt, daß der Ausströmdruck bei mindestens etwa 1 Bar oder etwas darüber liegt.

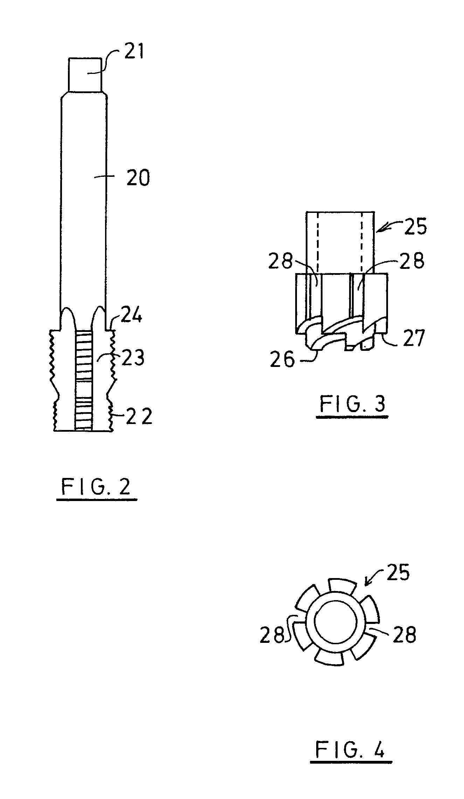

Sobald die Druckluftquelle so eingestellt ist, daß dieser Wert erreicht wird, kann mit dem Schneiden des Gewindes begonnen werden. Hierzu wird das in Figur 2 dargestellte Werkzeug verwendet. Dies enthält einen relativ langen Schaft 20, dessen äußeres Ende 21 mit einem Vierkant versehen ist. Hier kann ein Handgriff angreifen. Das Werkzeug enthält im Bereich seines Arbeitsendes vier flügelartige Schneidmesser 22, die durch vier abgerundete Spanabführnuten 23 unterbrochen sind. In einem ersten unmittelbar am Ende des Werkzeugs angeordneten Bereich entspricht der Durchmesser und natürlich auch die Gewindesteigung der vier Schneidmesser dem Durchmesser des bisher vorhandenen Gewindes. Die Schneidmesser 22 enthalten im Bereich ihrer Außenseite Gewindewindungen, die im Übergang zu den Nuten 23 Schneidkanten bilden. Das Werkzeug wird in das vorhandene Gewinde eingeschraubt und schneidet dabei möglicherweise vorhandene Verformungen des Gewindes weg. Nach einigen Gewindegängen ist das Werkzeug in dem vorhandenen Gewinde geführt, und bei Weiterdrehen kommt der zweite Abschnitt des Werkzeugs mit den im Durchmesser größeren Gewindewindungen in Eingriff mit der Bohrungswand. Hier wird nun das größere Gewinde geschnitten. Die hierbei auftretenden Späne gelangen in die Spannuten 23. Der im Brennraum 7 vorhandene Überdruck führt zu einer gezielten Strömung durch die vier Spanabführnuten 23, aus denen die einzelnen Späne mitgerissen und nach außen geführt werden.

Das Einschneiden durch Drehen des Werkzeugs erfolgt so lange, bis die zum Schaft hin gewandte Kante 24 der Schneidmesser 22 um einige Millimeter unter dem Gewindebeginn angeordnet ist. Das Werkzeug steckt dann also mit vollständig eingedrehtem Schneidmesser in dem neuen Gewinde. Der Durchmesser des Werkzeugschaft 20 ist kleiner als der Kerndurchmesser des Gewindes, so daß die Gasströmung auch am Schaft 20 vorbei gelangen kann.

Nun wird zum Fräsen einer Vertiefung rings um das Gewinde zur Aufnahme des Bundes der Gewindebuchse das in Figur 3 dargestellte Fräswerkzeug auf den Schaft 20 aufgesetzt. Es wird also vom Schaft 20 geführt und mit Hilfe eines Handgriffs verdreht. Es fräst mit seinen weiter innen gelegenen Zähnen 26 die erwähnte Vertiefung, bis die äußeren Zähne 27 auf dem Rand seitlich der Bohrung zur Anlage gelangen. Die Zähne 27 haben eine etwas andere Form und dienen nur zum Glätten der Oberseite des Zylinderkopfs 6 seitlich der Bohrung.

Auch das Fräswerkzeug 25 der Figur 3 enthält mehrere sich in Längsrichtung erstreckende Spanabführnuten 28, siehe auch Figur 4. Die Gasströmung, die aus den Nuten 23 herauskommt, gelangt also in die Nuten 28 und nimmt dort die vorhandenen bzw. entstehenden Späne auf und führt sie ab.

Nachdem mit dem Werkzeug der Figur 2 und anschließend der Figur 3 der Gewindeschneid- und Fräsvorgang abgeschlossen wurde, wird unter Beibehaltung der Gasströmung das Werkzeug durch Linksdrehen aus der Gewindebohrung herausgedreht, wobei sämtliche dann noch auftretenden oder sich ablösenden Späne ebenfalls mit nach außen befördert werden. Erst anschließend wird die Gasströmung abgestellt und die Gewindebuchse eingepreßt.

Zum Erleichtern des Spanabbrechens kann vorgesehen sein, daß das Gewindeschneidwerkzeug beispielsweise nach jeder Umdrehung einmal kurz zurückgedreht wird.

Das Verfahren ist auch dann anwendbar, wenn beim Erneuern des Gewindes keine Gewindebuchse eingepreßt wird, sondern statt dessen eine Drahtwendel bzw. ein Drahtgewinde verwendet wird.

Auch dann, wenn nur ein größeres Gewinde geschnitten und anschließend eine größere Schraube verwendet wird, ist das Verfahren anwendbar.

**Patentansprüche**

1. Verfahren zum Erneuern eines Gewindes in einer durchgehenden Bohrung (17), bei dem in die vorhandene Gewindebohrung (17) ein Gewinde mit größeren Durchmesser geschnitten wird, dadurch gekennzeichnet, daß während des Gewindeschneidens durch die Bohrung (17) von der Rückseite her ein Gasstrom erzeugt wird.

2. Verfahren nach Anspruch 1, dadurch gekennzeichnet, daß ein Gewindeschneidwerkzeug mit Spanabführnuten (23) verwendet wird, die sich vorzugsweise bis in den gewindefreien Abschnitt des Werkzeugschafts (20) erstrekken.

3. Verfahren nach Anspruch 1 oder 2, dadurch gekennzeichnet, daß nach dem Gewindeschneiden eine ringförmige Vertiefung für den Bund einer Gewindebuchse mit einem Spanabführnuten (28) aufweisenden Werkzeug (25) gefräst und dabei die Gasströmung aufrecht erhalten wird.

4.  Verfahren nach einem der vorhergehenden Ansprüche, dadurch gekennzeichnet, daß während des Herausdrehens des Gewindeschneidwerkzeugs die Gasströmung aufrecht erhalten bleibt.

5.  Verfahren nach einem der vorhergehenden Ansprüche, dadurch gekennzeichnet, daß vor einem anschließenden Einpressen einer Gewindebuchse der Gasstrom abgestellt wird.

6.  Verfahren nach einem der vorhergehenden Ansprüche, dadurch gekennzeichnet, daß bei zähem Material das Brechen des Spans dadurch unterstützt wird, daß das Gewindeschneidwerkzeug ab und zu kurz zurückgedreht wird.

7.  Verfahren nach einem der vorhergehenden Ansprüche, dadurch gekennzeichnet, daß beim Erneuern eines Gewindes einer in einen Hohlraum (7) führenden Bohrung (17) der Gasstrom dadurch erzeugt wird, daß Druckluft in den Hohlraum (7) eingeleitet wird, die aus der Gewindebohrung (17) ausströmt.

8.  Verfahren nach einem der vorhergehenden Ansprüche, dadurch gekennzeichnet, daß beim Erneuern eines Zündkerzengewindes der Zylinderkopf (6) auf dem Motorblock (1) bleibt und der Gasstrom dadurch erzeugt wird, daß Druckluft in den Brennraum (7) des Motors eingeblasen wird.

9.  Verfahren nach Anspruch 8, dadurch gekennzeichnet, daß bei einem Mehrzylindermotor während der Erneuerung des Zündkerzengewindes eines Zylinders die Zündkerzen der anderen Zylinder eingeschraubt bleiben.

10.  Verfahren nach einem der vorhergehenden Ansprüche, dadurch gekennzeichnet, daß der Ausströmdruck an der Bohrung (17) mindestens etwa ein Bar beträgt.

11.  Verfahren nach einem der Ansprüche 8 - 10, dadurch gekennzeichnet, daß die Druckluft über die Ansaugleitung (18) des Motors zugeführt wird.

12.  Verfahren nach Anspruch 11, dadurch gekennzeichnet, daß die Drosselklappe in geöffnetem Zustand gehalten wird.

13.  Verfahren nach einem der Ansprüche 8 - 10, dadurch gekennzeichnet, daß die Druckluft über die Auspuffleitung des Motors zugeführt wird.

14.  Verfahren nach einem der Ansprüche 8 - 13 dadurch gekennzeichnet, daß die Kurbelwelle soweit gedreht wird, daß für den betreffenden Zylinder der Kolben (3) im Bereich des oberen Totpunkts steht.

15.  Verfahren nach Anspruch 11, 12 oder 14, dadurch gekennzeichnet, daß die Druckluft an einer Stelle unmittelbar hinter dem Luftfilter eingeleitet wird.

16.  Verfahren nach einem der Ansprüche 1 - 7, dadurch gekennzeichnet, daß beim Erneuern des Gewindes für eine Ölablaßschraube die Ölwanne am Motorblock bleibt und der Gasstrom durch Einführen von Druckluft in die Ölwanne erzeugt wird.

FIG. 1

FIG. 2

FIG. 3

FIG. 4